# EUROPEAN PATENT APPLICATION

(11) **EP 1 818 150 A1**
(43) Date of publication of application: **15.08.2007**
(21) Application number: 04792040.0
(22) Date of filing: 05.10.2004
(51) Int. Cl.: B28D 1/14

(54) **DEVICE FOR MAKING HOLES ON GLASS BOARD**

(71) Applicant: Bando Kiko Co., Ltd, Tokushima-shi, Tokushima 770-0871 (JP)
(72) Inventor: BANDO, Kazuaki;, Tokushima-shi Tokushima;7700871 (JP)
(74) Representative: BOVARD AG
(86) International application number: PCT/JP2004/014629
(87) International publication number: WO 2006/038283

(57) **Abstract**

A apparatus 1 for drilling holes in a glass plate includes a plurality of recess-forming upper heads 5 and a plurality of recess-forming lower heads 6 which are respectively disposed with a quadrangular glass plate 2 placed therebetween and which respectively form mutually communicating recesses 18 and 19 in the glass plate 2 so as to form a plurality of holes 3 in the glass plate 2; a plurality of supporting means 9 for respectively supporting a lower surface 8 of the glass plate 2 on sides closer to edges 7 of the glass plate 2 than to positions where the recesses are formed by the plurality of recess-forming lower heads 6; and a plurality of pressing means 12 for pressing an upper surface 11 of the glass plate 2 on sides closer to the edges 7 of the glass plate 2 than to positions where the recesses are formed by the plurality of recess-forming upper heads 5, so as to clamp the glass plate 2 by respectively cooperating with the plurality of supporting means 9.

## Description

### TECHNICAL FIELD

The present invention relates to an apparatus for drilling holes in a glass plate for forming holes in a glass plate for use in a plasma display or the like.

### BACKGROUND ART

[Patent Document 1] JP-A-2004-122265

For example, the patent document 1 proposes an apparatus for drilling a hole in a glass plate in which a central portion side of a glass plate relative to a pair of hole drilling drills for forming a hole in a glass plate is supported.

### DISCLOSURE OF THE INVENTION

### PROBLEMS TO BE SOLVED BY THE INVENTION

Incidentally, in such an apparatus for drilling a hole in a glass plate, since the central portion side of the glass plate relative to the hole drilling drills is supported, there is a possibility that deflection can occur at a portion around the central portion of the glass plate, so that it is difficult to form a hole in a glass plate more accurately.

In addition, the above apparatus for drilling a hole in a glass plate is adapted such that a hole is formed in the glass plate by the pair of hole drilling drills, in a case where a plurality of holes are formed in the glass plate, the hole drilling operation using the pair of hole drilling drills is performed consecutively, so that it is difficult to form the holes in the glass plate in a shorter period of time.

The present invention has been devised in view of the above-described aspects, and its object is to provide an apparatus for drilling holes in a glass plate which makes it possible to form a plurality of holes in a glass plate more accurately and in a shorter period of time.

### MEANS FOR OVERCOMING THE PROBLEMS

An apparatus for drilling holes in a glass plate in accordance with the invention comprises: a plurality of recess-forming upper heads and a plurality of recess-forming lower heads which are respectively disposed with a glass plate placed therebetween and which respectively form mutually communicating recesses in the glass plate so as to form a plurality of holes in the glass plate; a plurality of supporting means for respectively supporting a lower surface of the glass plate on sides closer to edges of the glass plate than to positions where the recesses are formed by the plurality of recess-forming lower heads; and a plurality of pressing means for pressing an upper surface of the glass plate on sides closer to the edges of the glass plate than to positions where the recesses are formed by the plurality of recess-forming upper heads, so as to clamp the glass plate by respectively cooperating with the plurality of supporting means.

According to the apparatus for drilling holes in a glass plate in accordance with the invention, in particular, there are provided the plurality of supporting means for respectively supporting the lower surface of the glass plate on sides closer to the edges of the glass plate than to positions where the recesses are formed by the plurality of recess-forming lower heads, as well as the plurality of pressing means for pressing the upper surface of the glass plate on sides closer to the edges of the glass plate than to positions where the recesses are formed by the plurality of recess-forming upper heads, so as to clamp the glass plate by respectively cooperating with the plurality of supporting means. Therefore, tensile forces based on the plurality of supporting means and the plurality of pressing means can be imparted to the glass plate to which deflecting forces are applied during the formation of the holes, thereby making it possible to prevent the occurrence of deflection of the glass plate. Thus, it is possible to form the holes in the glass plate more accurately. Further, since there are provided the plurality of recess-forming upper heads and the plurality of recess-forming lower heads which are disposed with the glass plate placed therebetween and respectively form mutually communicating recesses in the glass plate so as to form a plurality of holes in the glass plate, it is possible to form the plurality of holes in the glass plate at one time, thereby making it possible to form the plurality of holes in the glass plate in a shorter time.

In a preferred example of the apparatus for drilling holes in a glass plate in accordance with the invention, each of the plurality of pressing means has a pressing pad for pressing the upper surface of the glass plate and vertically moving means for vertically moving the pressing pad, and each of the plurality of supporting means has a supporting pad for supporting the lower surface of the glass plate, the pressing pad and the supporting pad being opposed to each other in a vertical direction. According to this example, the glass plate can be clamped reliably.

The apparatus for drilling holes in a glass plate in accordance with the preferred example of the invention further comprises: upper moving means for moving the plurality of recess-forming upper heads and the plurality of pressing means along the upper surface of the glass plate; and lower moving means for moving the plurality of recess-forming lower heads and the plurality of supporting means along the lower surface of the glass plate. According to this example, it is possible to form the holes in various positions of the glass plate, and clamp portions of the glass plate corresponding to the dimensions and hole-forming positions of the glass plate.

In the preferred example of the apparatus for drilling holes in a glass plate in accordance with the invention, the upper moving means includes an X-direction linear moving unit for linearly moving the plurality of recess-forming upper heads, respectively, independently of each other in an X direction along a common X-direction linear movement path, and a Y-direction linear moving unit for linearly moving the plurality of recess-forming upper heads and the plurality of pressing means, respectively, in mechanical synchronism with each other in a Y direction, while the lower moving means includes an X-direction linear moving unit for linearly moving the plurality of recess-forming lower heads, respectively, independently of each other in the X direction along another common X-direction linear movement path, and a Y-direction linear moving unit for linearly moving the plurality of recess-forming lower heads and the plurality of supporting means, respectively, in mechanical synchronism with each other in the Y direction.

In the preferred example of the apparatus for drilling holes in a glass plate in accordance with the invention, the upper moving means and the lower moving means respectively have linear motors each having movers and a stator, and the plurality of recess-forming upper heads and the plurality of pressing means as well as the plurality of recess-forming lower heads and the plurality of supporting means are moved by the linear motors.

The apparatus for drilling holes in a glass plate in accordance with the preferred example of the invention further comprises: a sucking and holding unit for sucking and holding a central portion of the glass plate; and transporting means for transporting the glass plate which is sucked and held by the sucking and holding unit, wherein the plurality of recess-forming upper heads and the plurality of pressing means are constituted by a plurality of recess-forming upper heads and a plurality of pressing means on one side, which are located on a side closer to one side edge than to the central portion of the glass plate which is sucked and held by the sucking and holding unit, as well as a plurality of recess-forming upper heads and a plurality of pressing means on another side, which are located on a side closer to another side edge than to the central portion of the glass plate which is sucked and held by the sucking and holding unit, and wherein the plurality of recess-forming lower heads and the plurality of pressing means are constituted by a plurality of recess-forming lower heads and a plurality of supporting means on one side, which are located on the side closer to the side edge than to the central portion of the glass plate which is sucked and held by the sucking and holding unit, as well as a plurality of recess-forming lower heads and a plurality of supporting means on another side, which are located on the side closer to the side edge than to the central portion of the glass plate which is sucked and held by the sucking and holding unit.

In the preferred example of the apparatus for drilling holes in a glass plate in accordance with the invention, each of the plurality of recess-forming upper heads and the plurality of recess-forming lower heads includes a recess-forming drill, rotating means for rotating the drill, and a vertically moving unit for vertically moving the drill.

### ADVANTAGES OF THE INVENTION

According to the present invention, it is possible to provide an apparatus for drilling holes in a glass plate which makes it possible to form a plurality of holes in a glass plate more accurately and in a shorter period of time.

### BEST MODE FOR CARRYING OUT THE INVENTION

Next, a more detailed description will be given of an example of the mode for carrying out the invention on the basis of a preferred embodiment illustrated in the drawings. It should be noted that the invention is not limited to the embodiment.

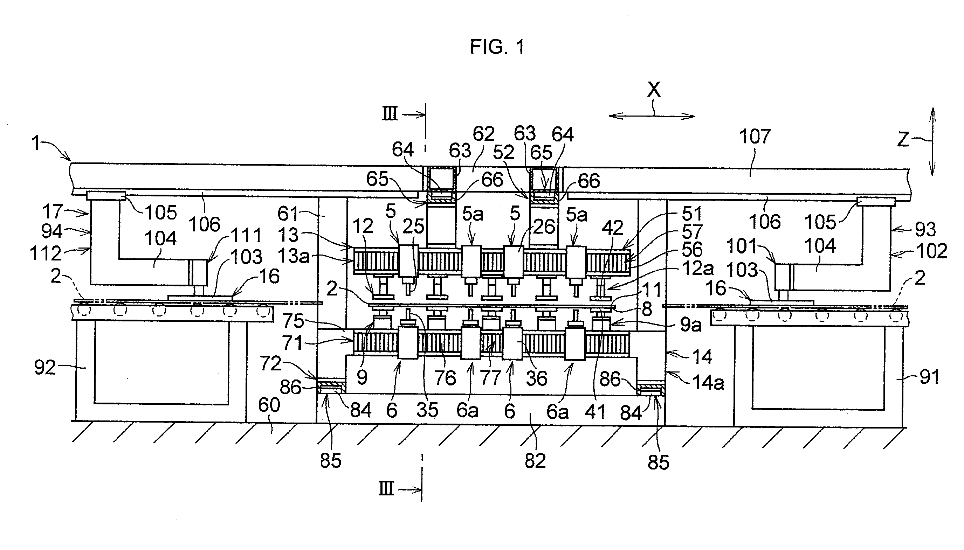

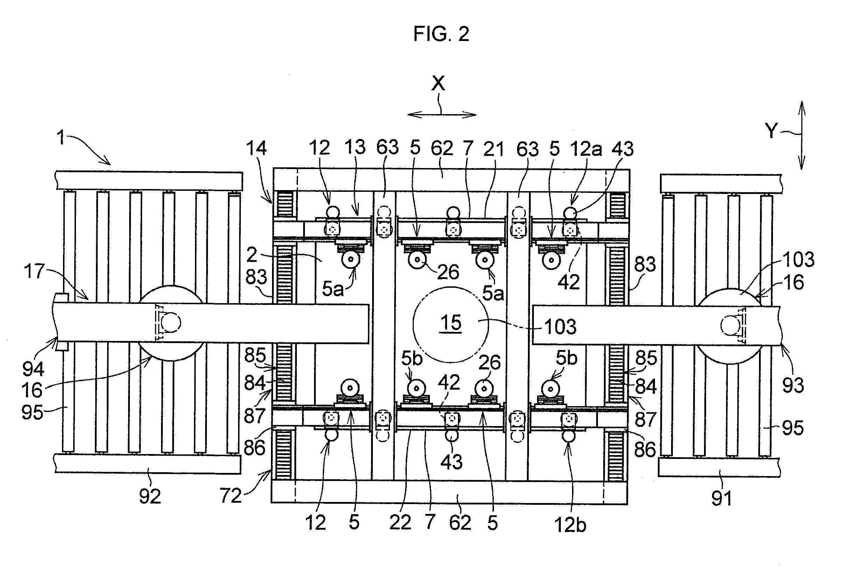

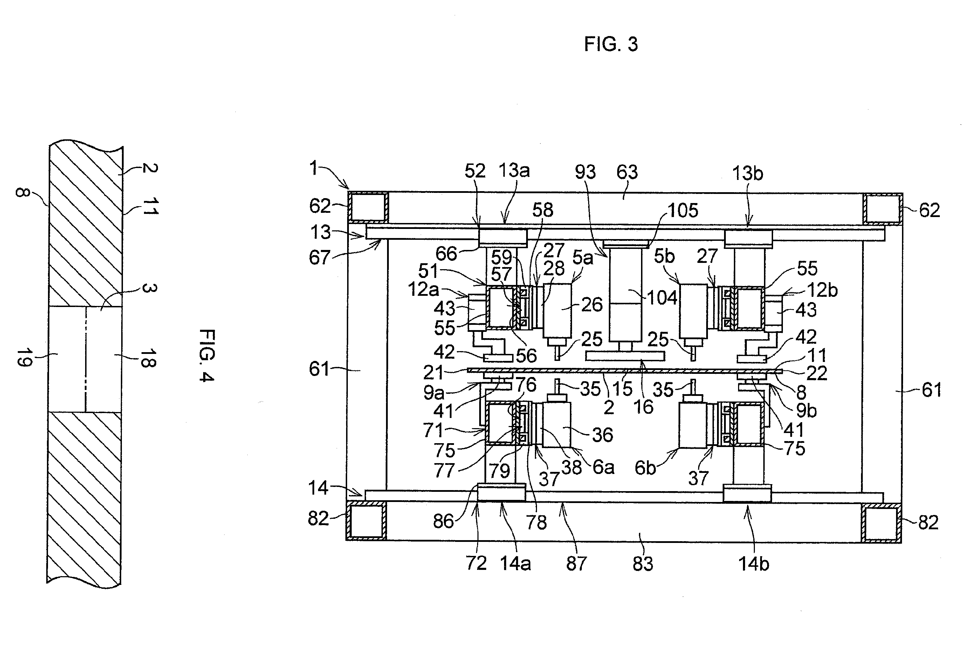

In Figs. 1 to 3, an apparatus 1 for drilling holes in a glass plate includes a plurality of recess-forming upper heads 5 and a plurality of recess-forming lower heads 6 which are respectively disposed with a quadrangular glass plate 2 placed therebetween and which respectively form mutually communicating recesses 18 and 19 in the glass plate 2 so as to form a plurality of holes 3, such as the one shown in Fig. 4, in the glass plate 2; a plurality of supporting means 9 for respectively supporting a lower surface 8 of the glass plate 2 on sides closer to edges 7 of the glass plate 2 than to positions where the recesses are formed by the plurality of recess-forming lower heads 6; a plurality of pressing means 12 for pressing an upper surface 11 of the glass plate 2 on sides closer to the edges 7 of the glass plate 2 than to positions where the recesses are formed by the plurality of recess-forming upper heads 5, so as to clamp the glass plate 2 by respectively cooperating with the plurality of supporting means 9; an upper moving means 13 for moving the plurality of recess-forming upper heads 5 and the plurality of pressing means 12 along the upper surface 11 of the glass plate 2; a lower moving means 14 for moving the plurality of recess-forming lower heads 6 and the plurality of supporting means 9 along the lower surface 8 of the glass plate 2; a sucking and holding unit 16 for sucking and holding a central portion 15 of the glass plate 2; and a transporting means 17 for transporting the glass plate 2 sucked and held by the sucking and holding unit 16.

The plurality of recess-forming upper heads 5 and the plurality of pressing means 12 are constituted by a plurality of recess-forming upper heads 5a and a plurality of pressing means 12a on one side, which are located on a side closer to one side edge 21 than to the central portion 15 of the glass plate 2 which is sucked and held by the sucking and holding unit 16, as well as a plurality of recess-forming upper heads 5b and a plurality of pressing means 12b on the other side, which are located on a side closer to the other side edge 22 than to the central portion 15 of the glass plate 2 which is sucked and held by the sucking and holding unit 16. The plurality of recess-forming lower heads 6 and the plurality of supporting means 9 are constituted by a plurality of recess-forming lower heads 6a and a plurality of supporting means 9a on one side, which are located on the side closer to the side edge 21 than to the central portion 15 of the glass plate 2 which is sucked and held by the sucking and holding unit 16, as well as a plurality of recess-forming lower heads 6b and a plurality of supporting means 9b on the other side, which are located on the side closer to the side edge 22 than to the central portion 15 of the glass plate 2 which is sucked and held by the sucking and holding unit 16. It should be noted that the plurality of recess-forming upper heads 5a and the plurality of pressing means 12a as well as the plurality of recess-forming lower heads 6a and the plurality of supporting means 9a are respectively constructed in the same way as the plurality of recess-forming upper heads 5b and the plurality of pressing means 12b as well as the plurality of recess-forming lower heads 6b and the plurality of supporting means 9b. Therefore, a detailed description will be given hereafter of the plurality of recess-forming upper heads 5a and the plurality of pressing means 12a as well as the plurality of recess-forming lower heads 6a and the plurality of supporting means 9a. As for the plurality of recess-forming upper heads 5b and the plurality of pressing means 12b as well as the plurality of recess-forming lower heads 6b and the plurality of supporting means 9b, the same reference numerals will be used in the drawings, as necessary, and a detailed description thereof will be omitted.

Each of the plurality of recess-forming upper heads 5a which are respectively disposed by being arranged in an X direction includes a recess-forming drill 25, a spindle motor 26 serving as a rotating means for rotating the drill 25, and a vertically moving unit 27 for vertically moving the drill 25. The vertically moving unit 27 includes a linear motor having a stator extending in a vertical direction Z perpendicular to the X direction and a mover which is movable in the vertical direction Z along this stator. The spindle motor 26 is secured to the mover of the aforementioned linear motor by means of a securing plate 28.

Each of the plurality of recess-forming lower heads 6a which are respectively disposed by being arranged in the X direction includes a recess-forming drill 35 disposed in face-to-face relation to each of the drills 25 of the plurality of recess-forming upper heads 5a in the vertical direction Z, a spindle motor 36 serving as a rotating means for rotating the drill 35, and a vertically moving unit 37 for vertically moving the drill 35. The vertically moving unit 37 includes a linear motor having a stator extending in the vertical direction Z and a mover which is movable in the vertical direction Z along this stator. The spindle motor 36 is secured to the mover of the aforementioned linear motor by means of a securing plate 38.

Each of the plurality of supporting means 9a which are respectively disposed by being arranged in the X direction includes a supporting pad 41 which is fixed to the lower moving means 14 and supports the lower surface 8 of the glass plate 2. The aforementioned supporting pad 41 is disposed on the side closer to the side edge 21 than to the drill 35 of the recess-forming lower head 6a. It should be noted that the respective supporting pads 41 of the plurality of supporting means 9b are disposed on the side closer to the side edge 22 than to the drill 35 of the recess-forming lower head 6b.

Each of the plurality of pressing means 12a which are respectively disposed by being arranged in the X direction includes a pressing pad 42 for pressing the upper surface 11 of the glass plate 2, as well as an air cylinder unit 43 as a vertically moving means which is fixed to the upper moving means 13 and moves the pressing pad 42 vertically. The aforementioned pressing pad 42 is disposed on the side closer to the side edge 21 than to the drill 25 of the recess-forming upper head 5a. The pressing pad 42 and the supporting pad 41 are disposed in such a manner as to oppose each other in the vertical direction Z. It should be noted that the respective pressing pads 42 of the plurality of pressing means 12b are disposed on the side closer to the side edge 22 than to the drill 25 of the recess-forming upper head 5b.

The upper moving means 13 is constituted by an upper moving device 13a located on the side edge 21 side and an upper moving device 13b located on the side edge 22 side. The lower moving means 14 is constituted by a lower moving device 14a located on the side edge 21 side and a lower moving device 14b located on the side edge 22 side. It should be noted that the upper moving device 13a and the lower moving device 14a are respectively constructed in the same way as the upper moving device 13b and the lower moving device 14b. Therefore, a detailed description will be given hereafter of the upper moving device 13a and the lower moving device 14a. As for the upper moving device 13b and the lower moving device 14b, the same reference numerals will be used in the drawings, as necessary, and a detailed description thereof will be omitted.

The upper moving device 13a includes an X-direction linear moving unit 51 for linearly moving the plurality of recess-forming upper heads 5a, respectively, independently of each other in the X direction along a common X-direction linear movement path, as well as a pair of Y-direction linear moving units 52 for linearly moving the plurality of recess-forming upper heads 5a and the plurality of pressing means 12a, respectively, in mechanical synchronism with each other in a Y direction perpendicular to the X direction and the vertical direction Z.

The X-direction linear moving unit 51 includes a supporting member 55 which is disposed above the glass plate 2, supports the plurality of recess-forming upper heads 5a and the air cylinder units 43 of the plurality of pressing means 12a, and extends in the X direction, as well as a linear motor 57 which has a stator 56 installed on the supporting member 55 and extending in the X direction and a plurality of movers respectively installed on the plurality of recess-forming upper heads 5a and movable in the X direction with respect to the stator 56. A movable plate 58, which is movable in the X direction together with the mover, is mounted on each of the movers of the linear motor 57, and the stator of the linear motor of each of the plurality of recess-forming upper heads 5a is installed on the movable plates 58. The movable plates 58 are respectively fitted in the supporting member 55 through an X-direction guide mechanism 59 formed by a rail, a slider, and the like, so as to be linearly movable in the X direction.

The above-described X-direction linear moving unit 51 is adapted to linearly move the plurality of recess-forming upper heads 5a, respectively, independently of each other in the X direction with respect to the supporting member 55 through the respective movable plates 58 by the operation of the linear motor 57.

The Y-direction linear moving unit 52 includes a frame 63 which is secured to a pair of upper frames 62 supported on a base 60 by means of vertical frames 61 and which extends in the Y direction, as well as a linear motor 65 which has a stator 64 installed on the frame 63 and extending in the Y direction and a mover movable in the Y direction with respect to the stator 64. A movable member 66, which is movable in the Y direction together with the mover, is mounted on the mover of the linear motor 65, and the movable member 66 is secured to the supporting member 55. The movable member 66 is fitted in the frame 63 through a Y-direction guide mechanism 67 formed by a rail, a slider, and the like, so as to be linearly movable in the Y direction.

The above-described Y-direction linear moving unit 52 is adapted to linearly move the plurality of recess-forming upper heads 5a and the plurality of pressing means 12a in mechanical synchronism in the Y direction by linearly moving the supporting member 55 in the Y direction with respect to the frame 63 through the movable member 66 by the operation of the linear motor 65.

The lower moving device 14a includes an X-direction linear moving unit 71 for linearly moving the plurality of recess-forming lower heads 6a, respectively, independently of each other in the X direction along another common X-direction linear movement path, as well as a pair of Y-direction linear moving units 72 for linearly moving the plurality of recess-forming lower heads 6a and the plurality of supporting means 9a, respectively, in mechanical synchronism with each other in the Y direction.

The X-direction linear moving unit 71 includes a supporting member 75 which is disposed below the glass plate 2, supports the plurality of recess-forming lower heads 6a and the plurality of supporting means 9a, and extends in the X direction, as well as a linear motor 77 which has a stator 76 installed on the supporting member 75 and extending in the X direction and a plurality of movers respectively installed on the plurality of recess-forming lower heads 6a and movable in the X direction with respect to the stator 76. A movable plate 78, which is movable in the X direction together with the mover, is mounted on each of the movers of the linear motor 77, and the stator of the linear motor of each of the plurality of recess-forming lower heads 6a is installed on the movable plates 78. The movable plates 78 are respectively fitted in the supporting member 75 through an X-direction guide mechanism 79 formed by a rail, a slider, and the like, so as to be linearly movable in the X direction.

The above-described X-direction linear moving unit 71 is adapted to linearly move the plurality of recess-forming lower heads 6a, respectively, independently of each other in the X direction with respect to the supporting member 75 through the respective movable plates 78 by the operation of the linear motor 77.

The Y-direction linear moving unit 72 includes a frame 83 which is secured to a pair of lower frames 82 supported on the base 60 and which extends in the Y direction, as well as a linear motor 85 which has a stator 84 installed on the frame 83 and extending in the Y direction and a mover movable in the Y direction with respect to the stator 84. A movable member 86, which is movable in the Y direction together with the mover, is mounted on the mover of the linear motor 85, and the movable member 86 is secured to the supporting member 75. The movable member 86 is fitted in the frame 83 through a Y-direction guide mechanism 87 formed by a rail, a slider, and the like, so as to be linearly movable in the Y direction.

The above-described Y-direction linear moving unit 72 is adapted to linearly move the plurality of recess-forming lower heads 6a and the plurality of supporting means 9a in mechanical synchronism in the Y direction by linearly moving the supporting member 75 in the Y direction with respect to the frame 83 through the movable member 86 by the operation of the linear motor 85.

The transporting means 17 includes a carrying-in table 91 disposed upstream of the upper moving means 13 and the lower moving means 14; a carrying-out table 92 disposed downstream of the upper moving means 13 and the lower moving means 14; a carrying-in device 93 for carrying in onto the supporting pads 41 the glass plate 2 in which holes are to be drilled and which is placed on the carrying-in table 91; and a carrying-out device 94 for carrying out the glass plate 2, in which the holes have been drilled and which is supported on the supporting pads 41, onto the carrying-out table 92 from the supporting pads 41. It should be noted that rollers 95 are rotatably installed on each of the carrying-in table 91 and the carrying-out table 92.

The carrying-in device 93 includes the above-described sucking and holding unit 16 disposed so as to be able to suck and hold the central portion 15 of the upper surface 11 of the glass plate 2 placed on the carrying-in table 91; an air cylinder unit 101 for vertically moving this sucking and holding unit 16; and a carrying-in moving unit 102 for moving the air cylinder unit 101 in the X direction.

The sucking and holding unit 16 of the carrying-in device 93 has a suction pad 103 and a vacuum suction pump (not shown) connected to the suction pad 103, and is adapted to cause the suction pad 103 to generate a suction force for sucking and holding the central portion 15 of the upper surface 11 of the glass plate 2 by the operation of the vacuum suction pump, to thereby suck and hold that central portion 15.

The moving unit 102 includes a substantially L-shaped supporting arm 104 for supporting the air cylinder unit 101; a slider 105 secured to an upper end of the supporting arm 104; a rail 106 which is fitted to allow the slider 105 to be movable in the X direction and extends in the X direction; a supporting frame 107 to which the rail 106 is secured and which extends in the X direction; and a driving means constituted by a linear motor or the like having a stator installed on the supporting frame 107 and extending in the X direction and a mover installed on the slider 105 and movable in the X direction with respect to this stator. The air cylinder unit 101 is adapted to cause the slider 105 installed by means of the supporting arm 104 to move in the X direction with respect to the supporting frame 107 by the driving of the driving means. It should be noted that the lower portion of the supporting arm 104 extends toward the downstream side in the X direction, and supports the air cylinder unit 101 at a distal end of that lower portion.

The above-described carrying-in device 93 is arranged as follows: The central portion 15 of the upper surface 11 of the glass plate 2, in which holes are to be drilled, is sucked and held by the sucking and holding unit 16; the sucked and held glass plate 2 is raised by the actuation of the air cylinder unit 101; and the raised glass plate 2 is moved in the X direction by the moving unit 102 through the air cylinder unit 101 and the sucking and holding unit 16 to dispose the glass plate 2 between the supporting pads 41 and the pressing pads 42. The glass plate 2 thus disposed is lowered by the actuation of the air cylinder unit 101 so as to be placed on the supporting pads 41, and the suction and holding of the placed glass plate 2 by the sucking and holding unit 16 is released, thereby carrying in the glass plate 2 placed on the carrying-in table 91 onto the supporting pads 41.

The carrying-out device 94 includes the above-described sucking and holding unit 16 disposed so as to be able to suck and hold the central portion 15 of the upper surface 11 of the glass plate 2 supported on the supporting pads 41; an air cylinder unit 111 for vertically moving this sucking and holding unit 16; and a carrying-out moving unit 112 for moving the air cylinder unit 111 in the X direction.

Since the sucking and holding unit 16, the air cylinder unit 111, and the moving unit 112 of the carrying-out device 94 are constructed in substantially the same way as the sucking and holding unit 16, the air cylinder unit 101, and the moving unit 102 of the carrying-in device 93, a detailed description of the sucking and holding unit 16, the air cylinder unit 111, and the moving unit 112 of the carrying-out device 94 will be omitted hereafter by using the same reference numerals in the drawings, as necessary. It should be noted that the lower portion of the supporting arm 104 of the carrying-out device 94 extends toward the upstream side in the X direction, and supports the air cylinder unit 111 at a distal end of that lower portion.

In the above-described apparatus 1 for drilling holes in a glass plate, the glass plate 2 in which holes are to be drilled is first carried in from on the carrying-in table 91 onto the supporting pads 41 by the carrying-in device 93, and the upper surface 11 of the carried-in glass plate 2 on the supporting pads 41 is pressed toward the supporting pads 41 by the pressing pads 42 which are lowered by the actuation of the air cylinder units 43, thereby clamping areas on the side edge 21 side and areas on the side edge 22 side of the glass plate 2 by the plurality of pressing pads 42 and the plurality of supporting pads 41.

Next, the plurality of drills 25 being rotated by the spindle motors 26 are respectively lowered by the vertically moving units 27, and the plurality of recesses 18 are formed at one time in the upper surface 11 of the clamped glass plate 2 to be drilled. After the formation of the recesses 18, the drills 25 are raised and drawn out from the recesses 18 by the vertically moving unit 27. Subsequently, the plurality of drills 35 being rotated by the spindle motors 36 are respectively raised by the vertically moving units 37, and the plurality of recesses 19 communicating with the plurality of recesses 18 are formed in the lower surface 8 of the glass plate 2 from which the drills 25 were drawn out. After the formation of the recesses 19, the drills 35 are lowered and drawn out from the recesses 19 by the vertically moving unit 37. Thus, the plurality of holes 3, in which the plurality of recesses 18 and 19 communicate with each other, are formed in the glass plate 2. After the formation of the plurality of these holes 3, the pressing pads 43 are raised by the actuation of the air cylinder units 43 to move away from the upper surface 11 of the glass plate 2, thereby releasing the clamping of the glass plate 2 by the supporting pads 41 and the pressing pads 42.

Here, the respective positions of the plurality of drills 25 in the X direction with respect to the glass plate 2 are set in advance by respectively linearly moving the plurality of drills 25 in the X direction independently of each other by the operation of the X-direction linear moving unit 51. The respective positions of the plurality of drills 25 in the Y direction with respect to the glass plate 2 are set in advance by respectively linearly moving the plurality of drills 25 in the Y direction in mechanical synchronism with each other by the operation of the Y-direction linear moving unit 52. The respective positions of the plurality of drills 35 in the X direction with respect to the glass plate 2 are set in advance by respectively linearly moving the plurality of drills 35 in the X direction independently of each other by the operation of the X-direction linear moving unit 71. The respective positions of the plurality of drills 35 in the Y direction with respect to the glass plate 2 are set in advance by respectively linearly moving the plurality of drills 35 in the Y direction in mechanical synchronism with each other by the operation of the Y-direction linear moving unit 72. The respective positions of the pressing pads 42 and the supporting pads 41 in the Y direction with respect to the glass plate 2 are also set by the respective operation of the aforementioned Y-direction linear moving units 52 and 72.

Finally, the glass plate 2 with the plurality of holes 3 formed therein is carried out from on the supporting pads 41 onto the carrying-out table 92 by the carrying-out device 94. It should be noted that the carrying out of the glass plate 2 with the holes drilled therein by the carrying-out device 94 may be performed synchronously with the carrying-in by the carrying-in device 93 of the glass plate 2 in which holes are to be drilled.

According to the apparatus 1 for drilling holes in a glass plate in accordance with this embodiment, there are provided the plurality of recess-forming upper heads 5 and the plurality of recess-forming lower heads 6 which are respectively disposed in face-to-face relation with each other with the glass plate 2 placed therebetween and which respectively form the mutually communicating recesses 18 and 19 in the glass plate 2 so as to form the plurality of holes 3 in the glass plate 2; the plurality of supporting means 9 for respectively supporting the lower surface 8 of the glass plate 2 on sides closer to the edges 7 of the glass plate 2 than to positions where the recesses are formed by the plurality of recess-forming lower heads 6; and the plurality of pressing means 12 for pressing the upper surface 11 of the glass plate 2 on sides closer to the edges 7 of the glass plate 2 than to positions where the recesses are formed by the plurality of recess-forming upper heads 5, so as to clamp the glass plate 2 by respectively cooperating with the plurality of supporting means 9. Therefore, tensile forces based on the plurality of supporting means 9 and the plurality of pressing means 12 can be imparted to the glass plate 2 to which deflecting forces are applied during the formation of the recesses 18 or 19, thereby making it possible to prevent the occurrence of deflection of the glass plate 2. Thus, it is possible to form the holes 3 in the glass plate 2 more accurately and form the plurality of holes 3 in the glass plate 2 at one time, thereby making it possible to form the plurality of holes 3 in the glass plate 2 in a shorter time.

According to the apparatus 1 for drilling holes in a glass plate, each of the plurality of pressing means 12 has the pressing pad 42 for pressing the upper surface 11 of the glass plate 2 and the air cylinder unit 43 serving as the vertically moving means for vertically moving the pressing pad 42. Each of the plurality of supporting means 9 has the supporting pad 41 for supporting the lower surface 8 of the glass plate 2, and the pressing pad 42 and the supporting pad 41 are opposed to each other in the vertical direction Z. Therefore, the glass plate 2 can be reliably clamped by the pressing pads 42 and the supporting pads 41 which are opposed to each other in the vertical direction Z.

According to the apparatus 1 for drilling holes in a glass plate, there are provided the upper moving means 13 for moving the plurality of recess-forming upper heads 5 and the plurality of pressing means 12 along the upper surface 11 of the glass plate 2, as well as the lower moving means 14 for moving the plurality of recess-forming lower heads 6 and the plurality of supporting means 9 along the lower surface 8 of the glass plate 2. Therefore, it is possible to form the holes 3 in various positions of the glass plate 2, and clamp portions of the glass plate 2 corresponding to the dimensions and hole-forming positions of the glass plate 2.

### BRIEF DESCRIPTION OF THE DRAWINGS

Fig. 1 is an explanatory front elevational view, partly in section, of a preferred embodiment of the invention;
Fig. 2 is an explanatory plan view of the embodiment shown in Fig. 1;
Fig. 3 is an explanatory view, taken in the direction of arrows along line III - III, of the embodiment shown in Fig. 1; and
Fig. 4 is a partially enlarged explanatory view of a glass plate in which holes are drilled in accordance with the embodiment shown in Fig. 1.

### DESCRIPTION OF REFERENCE NUMERALS AND SIGNS

1: apparatus for drilling holes in a glass plate
2: glass plate
3: hole
5: recess-forming upper head
6: recess-forming lower head
7: edge
8: lower surface
9: supporting means
11: upper surface
12: pressing means
13: upper moving means
14: lower moving means
15: central portion
16: sucking and holding unit
17: transporting means
18, 19: recesses
21, 22: side edges

## Claims

1. An apparatus for drilling holes in a glass plate, comprising:
a plurality of recess-forming upper heads and a plurality of recess-forming lower heads which are respectively disposed with a glass plate placed therebetween and which respectively form mutually communicating recesses in the glass plate so as to form a plurality of holes in the glass plate; a plurality of supporting means for respectively supporting a lower surface of the glass plate on sides closer to edges of the glass plate than to positions where the recesses are formed by said plurality of recess-forming lower heads; and a plurality of pressing means for pressing an upper surface of the glass plate on sides closer to the edges of the glass plate than to positions where the recesses are formed by said plurality of recess-forming upper heads, so as to clamp the glass plate by respectively cooperating with said plurality of supporting means.

2. The apparatus for drilling holes in a glass plate according to claim 1, wherein each of said plurality of pressing means has a pressing pad for pressing the upper surface of the glass plate and vertically moving means for vertically moving said pressing pad, and each of said plurality of supporting means has a supporting pad for supporting the lower surface of the glass plate, said pressing pad and said supporting pad being opposed to each other in a vertical direction.

3. The apparatus for drilling holes in a glass plate according to claim 1 or 2, further comprising: upper moving means for moving said plurality of recess-forming upper heads and said plurality of pressing means along the upper surface of the glass plate; and lower moving means for moving said plurality of recess-forming lower heads and said plurality of supporting means along the lower surface of the glass plate.

4. The apparatus for drilling holes in a glass plate according to claim 3, wherein said upper moving means includes an X-direction linear moving unit for linearly moving said plurality of recess-forming upper heads, respectively, independently of each other in an X direction along a common X-direction linear movement path, and a Y-direction linear moving unit for linearly moving said plurality of recess-forming upper heads and said plurality of pressing means, respectively, in mechanical synchronism with each other in a Y direction, while said lower moving means includes an X-direction linear moving unit for linearly moving said plurality of recess-forming lower heads, respectively, independently of each other in the X direction along another common X-direction linear movement path, and a Y-direction linear moving unit for linearly moving said plurality of recess-forming lower heads and said plurality of supporting means, respectively, in mechanical synchronism with each other in the Y direction.

5. The apparatus for drilling holes in a glass plate according to claim 3 or 4, wherein said upper moving means and said lower moving means respectively have linear motors each having movers and a stator, and said plurality of recess-forming upper heads and said plurality of pressing means as well as said plurality of recess-forming lower heads and said plurality of supporting means are moved by said linear motors.

6. The apparatus for drilling holes in a glass plate according to any one of claims 1 to 5, further comprising: a sucking and holding unit for sucking and holding a central portion of the glass plate; and transporting means for transporting the glass plate which is sucked and held by said sucking and holding unit, wherein said plurality of recess-forming upper heads and said plurality of pressing means are constituted by a plurality of recess-forming upper heads and a plurality of pressing means on one side, which are located on a side closer to one side edge than to the central portion of the glass plate which is sucked and held by said sucking and holding unit, as well as a plurality of recess-forming upper heads and a plurality of pressing means on another side, which are located on a side closer to another side edge than to the central portion of the glass plate which is sucked and held by said sucking and holding unit, and wherein said plurality of recess-forming lower heads and said plurality of pressing means are constituted by a plurality of recess-forming lower heads and a plurality of supporting means on one side, which are located on the side closer to the side edge than to the central portion of the glass plate which is sucked and held by said sucking and holding unit, as well as a plurality of recess-forming lower heads and a plurality of supporting means on another side, which are located on the side closer to the side edge than to the central portion of the glass plate which is sucked and held by said sucking and holding unit.

7. The apparatus for drilling holes in a glass plate according to any one of claims 1 to 6, wherein each of said plurality of recess-forming upper heads and said plurality of recess-forming lower heads includes a recess-forming drill, rotating means for rotating said drill, and a vertically moving unit for vertically moving said drill.
